# EUROPÄISCHE PATENTSCHRIFT

(11) **EP 1 169 788 B1**
(45) Veröffentlichungstag und Bekanntmachung des Hinweises auf die Patenterteilung: **20.08.2003**
(21) Anmeldenummer: 00934869.9
(22) Anmeldetag: 04.04.2000
(51) Int. Cl.: H04B 7/005, H04Q 7/38, H04L 12/28, H04L 12/56

(54) **STOCHASTISCHE SENDELEISTUNGSEINSTELLUNG IN EINEM KANAL ZUM WILLKÜRLICHEN ZUGRIFF EINES FUNK-KOMMUNIKATIONSSYSTEM**
STOCHASTIC REGULATION OF TRANSMITTER POWER IN A RANDOM ACCESS CHANNEL OF A RADIO COMMUNICATION SYSTEM
REGLAGE STOCHASTIQUE DE LA PUISSANCE D'EMISSION DANS UN CANAL D'ACCES ALEATOIRE A UN SYSTEME DE RADIOCOMMUNICATION

(30) Priorität: 22.04.1999 DE 19918371
(43) Veröffentlichungstag der Anmeldung: 09.01.2002
(73) Patentinhaber: SIEMENS AKTIENGESELLSCHAFT, 80333 München (DE)
(72) Erfinder: MECKLENBRÄUKER, Christoph, A-1220 Wien (AT); SLANINA, Peter, A-3441 Judenau (AT)
(86) Internationale Anmeldenummer: DE0001034
(87) Internationale Veröffentlichungsnummer: WO00065745

(56) Entgegenhaltungen:
- WO-A-97/46041
- LAMAIRE R O ET AL: "ON THE RANDOMIZATION OF TRANSMITTER POWER LEVELS TO INCREASE THROUGHPUT IN MULTIPLE ACCESS RADIO SYSTEMS" WIRELESS NETWORKS,US,ACM, Bd. 4, Nr. 3, 1. April 1998 (1998-04-01), Seiten 263-277, XP000750446 ISSN: 1022-0038
- MCCARTIN J T ET AL: "VARIABLE PACKET ALOHA NETWORKS" VEHICULAR TECHNOLOGY CONFERENCE,US,NEW YORK, IEEE, Bd. CONF. 40, 6. Mai 1990 (1990-05-06), Seiten 360-365, XP000204140
- METZNER J J: "ON IMPROVING UTILIZATION IN ALOHA NETWORKS" IEEE TRANSACTIONS ON COMMUNICATIONS,US,IEEE INC. NEW YORK, April 1976 (1976-04), Seiten 447-448, XP000809354 ISSN: 0090-6778

## Beschreibung

Die Erfindung betrifft ein Verfahren und eine Teilnehmerstation zur Signalübertragung in einem Kanal zum willkürlichen Zugriff eines Funk-Kommunikationssystems.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. .Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Ein Kanal zum willkürlichen Zugriff (RACH random access channel) eines Funk-Kommunikationssystems zeichnet sich dadurch aus, daß der Zugriff auf diesen Kanal nicht koordiniert ist. Die Mobilstationen einer Funkzelle können diesen Kanal ohne vorherige Zuteilung nutzen, um beispielsweise eine darauffolgende Zuteilung von-funktechnischen Ressourcen z.B. beim Verbindungsaufbau anzufordern.

Durch den unkoordinierten Zugriff kommt es jedoch zu Kollisionen zwischen den Aussendungen der einzelnen Mobilstationen. Wenn sich bei einer empfangenden Basisstation die Aussendungen mehrerer Mobilstationen überlagern, dann sind die Aussendungen nicht mehr detektierbar und die Mobilstationen erhalten damit auch keine Quittierung der Aussendung.

Nach einer Kollision versuchen die Mobilstationen erneut, im Kanal für den willkürlichen Zugriff zu senden. Je häufiger der Zugriff wiederholt werden muß, um so länger ist die Wartezeit und um so mehr sinkt die Effizienz dieses Zugriffsverfahrens.

In DE 198 17 771 wurde daher vorgeschlagen, zueinander zeitliche orthogonale Zugriffsblöcke zuzulassen und durch Wahl eines von mehreren unterschiedlichen Zugriffsblöcke, d.h. von unterschiedlichen Sendezeitpunkten innerhalb des Kanals, die Wahrscheinlichkeit einer Kollision zu verringern. Aus ETSI SMG2 UMTS L1 Expert Group, Tdoc SMG2 UMTS-L1 455/98, 14. Oktober 1998, ist eine weitere Möglichkeit bekannt geworden, die Effizienz des Verfahrens zu verbessern. Hierbei wird vorgeschlagen, eine schrittweise Leistungserhöhung vorzusehen. Die Mobilstation beginnen mit einer zur normalen Leistungseinstellung reduzierten Sendeleistung und erhöhen die Sendeleistung schrittweise bis eine Empfangsbestätigung der Basisstation vorliegt.

Diese Verfahren stellen die Sendeleistung nach rein deterministischen Gesichtspunkten ein, so daß es bei gleichem Szenario immer wieder zu den gleichen Kollisionsproblemen kommt.

In der WO 97 46041 A ist ein Verfahren gemäß dem Oberbegriff des Anspruchs 1 beschrieben.

Der Erfindung liegt die Aufgabe zugrunde, die Effizienz der Signalübertragung im Kanal zum willkürlichen Zugriff weiter zu erhöhen. Diese Aufgabe wird durch das Verfahren mit den Merkmalen des Anspruchs 1 und die Teilnehmerstation mit den Merkmalen des Anspruchs 9 gelöst. Vorteilhafte Weiterbildungen der Erfindung sind den Unteransprüchen zu entnehmen.

Erfindungsgemäß benutzen mehrere Teilnehmerstationen den Kanal zum willkürlichen Zugriff unkoordiniert und übertragen Erfindungsgemäß benutzen mehrere Teilnehmerstationen den Kanal zum willkürlichen Zugriff unkoordiniert und übertragen Signale in diesem Kanal mit einer Sendeleistung, die nach einem Zufallsprinzip eingestellt wird. Die deterministische Sendeleistungsregelung wird durch eine stochastische Sende leistungsregelung ersetzt. Für eine wiederholte Aussendung zweier Teilnehmerstationen ist es unwahrscheinlich, daß beide wiederum mit der gleichen Sendeleistung senden. Kommt es zu Kollisionen zwischen zwei Aussendungen, die nunmehr nicht die gleiche Empfangsleistung bei der Basisstation haben, dann ist bei ausreichendem Leistungsunterschied zumindest das leistungsstärkere Signal auswertbar ("Capture Effect") und nur die Aussendung des leistungsschwächeren Signals muß wiederholt werden. Damit verringert sich im Durchschnitt die Verzögerung bis zu einem erfolgreichen Empfang der Aussendungen.

Besonders bei stationären Teilnehmerstationen, bei denen gleiche Kollisionsszenarios wiederholt eintreten, schafft die Erfindung eine höhere Detektionswahrscheinlichkeit für zumindest eine Aussendung einer Teilnehmerstation in einem Zugriffsblock.

Nach einer vorteilhaften Weiterbildung der Erfindung wird für eine Teilmenge von Aussendungen bzw. Anwendungen die stochastische Sendeleistungsregelung eingesetzt. Andere Aussendungen bzw. Anwendungen können z.B. durch Einstellung einer regelmäßig überhöhten Sendeleistung bezüglich der Wahrscheinlichkeit einer sofortigen Detektion priorisiert werden. Eine solche Priorisierung kann für manche Anwendungen, z.B. als Aufforderung zur Zuteilung funktechnischer Ressourcen, als Quittierung oder als Meldung zur Aktualisierung des Aufenthaltsortes von Teilnehmerstationen, oder für eine Teilmenge der Teilnehmerstationen oder eine Teilmenge von Diensten gelten. Damit wird es dem Betreiber des Funk-Kommunikationssystems ermöglicht, eine Differenzierung innerhalb von Anwendungen, Teilnehmerstationen oder Diensten vorzunehmen und sich eine höhere Qualität entsprechend vergüten zu lassen.

Ein Zufallsgenerator, der die Sendeleistungen nach dem Zufallsprinzip einstellt, kann nach vorteilhaften Ausgestaltungen der Erfindung bestimmte Verteilungseigenschaften berücksichtigen:
Eine mittlere Sendeleistung, die z.B. an der Dämpfung der Funkschnittstelle - gemessen über den BCCH (broadcast control channel) - gibt den gewünschten Mittelwert für zufällig gewählte Sendeleistungen vor.
Eine Varianz der Sendeleistungen gibt den Bereich der möglichen Abweichung vom Mittelwert vor. Je größer die Varianz, um so größer die Wirksamkeit des "Capture Effects", jedoch steigt das Risiko, das eine einzelne Aussendung aufgrund zu geringer Sendeleistung nicht mehr detektierbar ist.
Die Korrelation zwischen aufeinanderfolgenden Aussendungen gibt ein Maß vor, wie stark sich deren Sendeleistungen bei ansonsten gleichem Szenario unterscheiden können. Durch Korrelationskoeffizienten werden Parameter definiert, die den Grad der stochastischen Regelung vorgeben.

Diese Verteilungseigenschaften können funkzellenindividuell vorgegeben und den Teilnehmerstationen signalisiert werden. Somit ist eine Optimierung des Zugriffs auf den Kanal zum willkürlichen Zugriff möglich, der die konkreten Gegebenheiten der Funkzelle berücksichtigt.

Besonders wichtig ist die Ausnutzung einer Ressourceneinheit der funktechnischen Ressourcen bei Funk-Kommunikationssystemen mit breitbandigen Kanälen, da die kleinste Ressourceneinheit verhältnismäßig groß ist. Die Kanäle sind nach einem TDD- oder FDD-Modus eines UMTS-Mobilfunksystems organisiert.

Ausführungsbeispiele der Erfindung werden anhand der beiliegenden Zeichnungen näher erläutert.

### Dabei zeigen

- Fig 1: ein Funk-Kommunikationssystem,
- Fig 2: eine schematische Darstellung einer TDD-Funkschnittstelle,
- Fig 3: eine vereinfachte Darstellung der Sendeleistungseinstellung,
- Fig 4: eine stochastische Verteilung von Sendeleistungen, und
- Fig 5: eine mögliche Wahrscheinlichkeitsdichte des Sendeleistung.

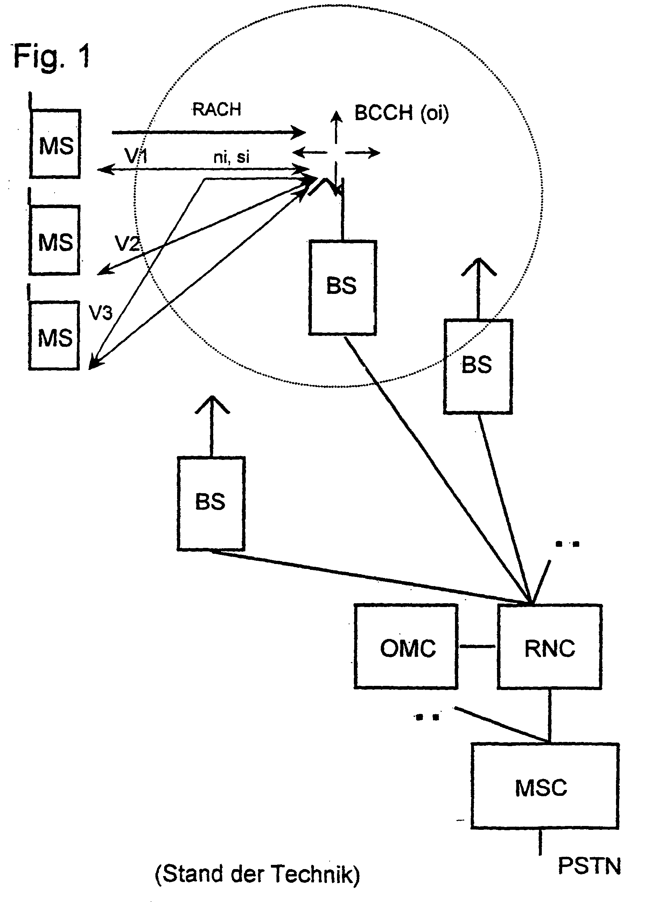

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC zur Steuerung der Basisstationen BS und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle eine Verbindung zu einer Teilnehmerstation, z.B. Mobilstationen MS oder anderweitigen mobilen und stationären Endgeräten, aufbauen. Durch jede Basisstation BS wird zumindest eine Funkzelle gebildet.

In FIG 1 sind beispielhaft Verbindungen V1, V2, V3 zur Übertragung von Nutzinformationen ni und Signalisierungsinformationen als Punkt-zu-Punkt-Verbindungen zwischen Mobilstationen MS und einer Basisstation BS und ein Organisationskanal BCCH als Punkt-zu-Multipunkt-Verbindung dargestellt. Im Organisationskanal BCCH werden Organisationsinformationen oi mit einer bekannten konstanten Sendeleistung von der Basisstation BS übertragen, die für alle Teilnehmerstationen MS auswertbar sind und Angaben über die in der Funkzelle angebotenen Dienste, über die Konfiguration der Kanäle der Funkschnittstelle und ggf. über Verteilungseigenschaften der Sendeleistung enthalten. In Aufwärtsrichtung UL wird für die Teilnehmerstationen MS ein Kanal RACH zum willkürlichen Zugriff angeboten.

Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß und für im unlizensierten Frequenzbereich betriebene Basisstationen und Teilnehmerstationen.

Im folgenden wird die Erfindung anhand eines Mobilfunksystems mit einer Funkschnittstelle im TDD-Übertragungsverfahren (time division duplex) erklärt, wobei ein Einsatz im FDD-Übertragungsverfahren (frequency division duplex) ebenso möglich ist.

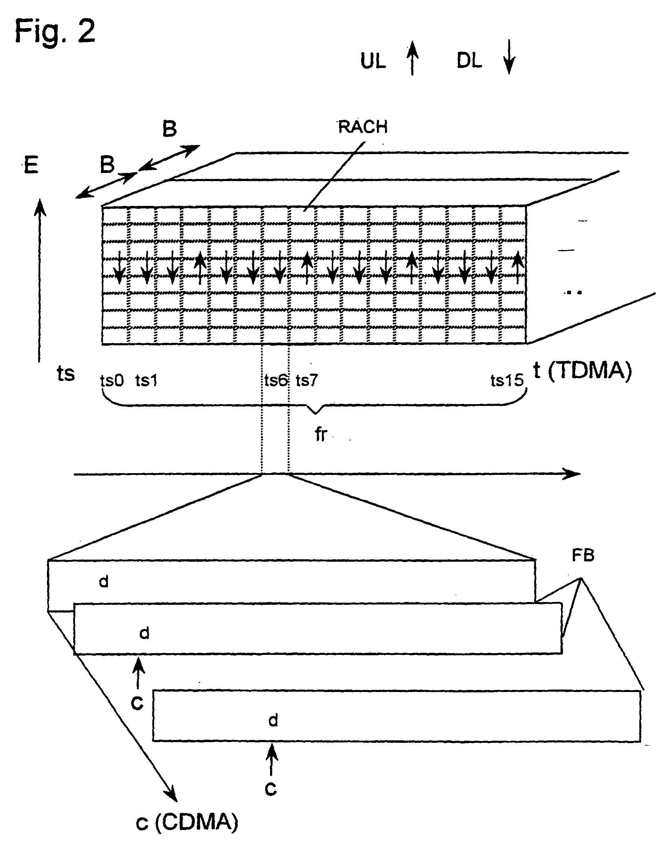

Die Rahmenstruktur einer TDD-Funkübertragung ist aus Fig 2 ersichtlich. Gemäß einer TDMA-Komponente (time division multiple access) ist eine Aufteilung eines breitbandigen Frequenzbands, beispielsweise der Bandbreite B = 5 MHz in mehrere Zeitschlitze ts gleicher Zeitdauer, beispielsweise 16 Zeitschlitze ts0 bis ts15 pro Rahmen fr vorgesehen. Ein Teil der Zeitschlitze ts werden in Abwärtsrichtung DL und ein Teil der Zeitschlitze werden in Aufwärtsrichtung UL benutzt. Bei diesem TDD-Übertragungsverfahren entspricht das Frequenzband für die Aufwärtsrichtung UL dem Frequenzband für die Abwärtsrichtung DL.

Innerhalb eines Zeitschlitze ts6 werden Informationen mehrerer Verbindungen in Funkblöcken FB übertragen. Die Daten d sind verbindungsindividuell mit einer Feinstruktur, einem Spreizkode c, gespreizt, so daß empfangsseitig beispielsweise n Verbindungen durch diese CDMA-Komponente (code division multiple access) separierbar sind.

Ein Zeitschlitz ts7 in Aufwärtsrichtung UL wird als Kanal für den willkürlichen Zugriff RACH benutzt, auf den die Mobilstationen MS unkoordiniert zugreifen können. Dieser willkürliche, unkoordinierte Zugriff kann für folgende Anwendungen eingesetzt werden:
- erstmaliger Zugriff für einen Verbindungsaufbau,
- Übertragung kleiner Datenpakete,
- Übertragung einer Quittierung empfangener Datenpakete,
- Anfrage der Mobilstation MS zur Zuteilung von funktechnischen Ressourcen während einer Verbindung,
- Auffrischen (update) des Aufenthaltsortes der Mobilstation MS im sogenannten "idle state".

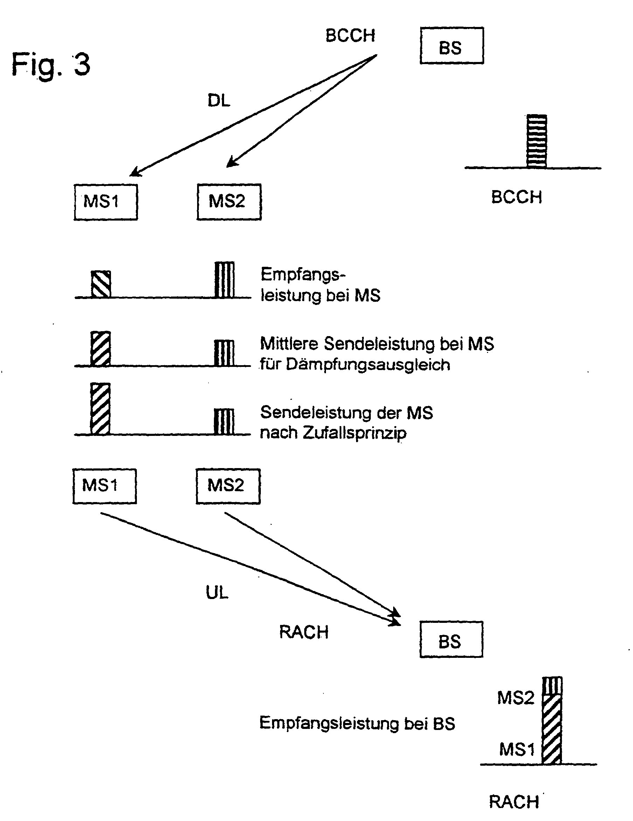

Die Mobilstationen MS benutzen den Kanal zum willkürlichen Zugriff RACH zwar unkoordiniert, aber mit geregelter Sendeleistung. Dazu werden vorab Dämpfungswerte (path loss) durch Messungen bestimmt. Die Dämpfungswerte können vorteilhafterweise durch Auswertung der Empfangsleistung des Organisationskanals BCCH bestimmt werden, siehe Fig 3. Der Organisationskanal BCCH ist ständig zugänglich und sendet mit bekannter Sendeleistung.

Aus der gemessenen Empfangsleistung bei der Mobilstation MS und den zellenweise durch Bekanntgabe im Organisationskanal BCCH vorgegebenen Verteilungseigenschaften: mittlere Sendeleistung, Varianz und Korrelationskoeffizient kann eine als Zufallsgenerator ausgebildete Steuereinrichtung in der Mobilstation MS die für eine bestimmte Empfangsleistung bei der Basisstation BS notwendige Sendeleistung einer Sendeeinrichtung der Mobilstation MS nach einem Zufallsprinzip errechnen. Der Mittelwert der Sendeleistung orientiert sich an der Dämpfung, d.h. an der Empfangsleistung des Organisationskanals BCCH bei der Mobilstation MS. Je kleiner die Empfangsleistung bei der Mobilstation MS, umso größer muß in Aufwärtsrichtung UL der Mittelwert gewählt werden.

Die zufällige Wahl der Sendeleistung bedeutet in Fig 3, daß die erste Mobilstation MS1 eine Sendeleistung über den Dämpfungsausgleich hinaus einstellt, währenddessen die zweite Mobilstation MS2 ihre Sendeleistung geringer einstellt. Damit. ergibt sich für die gleichzeitigen Aussendungen der beiden Mobilstation MS1, MS2 im Kanal mit willkürlichem Zugriff RACH bei der Basisstation BS eine Empfangsleistung für die Anteile der beiden Mobilstationen MS, die eine wesentlich stärker Leistung für die erste Mobilstation MS1 im Vergleich zur zweiten Mobilstation MS2 bedeutet.

Dadurch sind die Aussendungen der ersten Mobilstation MS1 trotz der Kollision auswertbar.-Nur die zweite Mobilstation MS2 muß wiederholt senden. Die Wiederholung erfolgt ggf. mit einer anderen Sendeleistung und in einem zeitlichen Abstand der von jeder Mobilstation MS individuell und unterschiedlich festlegbar ist, um eine erneute Kollision zu vermeiden.

Einige der Mobilstationen MS, Anwendungen oder Dienste können jedoch von der zufälligen Wahl der.Sendeleistung abweichen. Eine Teilmenge der Anwendungen, Mobilstationen MS oder Dienste (z.B. anhand der Dienstqualität QoS) sind priorisiert, so daß beispielsweise eine überhöhte Sendeleistung bei der ersten Aussendung benutzt wird.

Im Vergleich zu einer nur auf die Dämpfung bezogenen Sendeleistung kann die von einer Mobilstation MS1 gewählte Sendeleistung kleiner, gleich oder entsprechend einer bestimmten Stufe überhöht werden, siehe Fig, 4. Angenommen die mittlere Sendeleistung ist über eine gewisse Zeitdauer konstant, z.B. die Mobilstation MS1 bewegt sich nicht, dann erfolgen die aufeinanderfolgenden Aussendungen der Mobilstation MS1 trotzdem nicht mit einer konstanten Sendeleistung. Innerhalb einer vorgegebenen Varianz kann die Mobilstation MS1 die Sendeleistung willkürlich nach einem Zufallsprinzip wählen.

Zwischen den Sendeleistungen mehrerer Aussendungen können die Korrelationen gering oder groß sein. Geringe Korrelation bedeutet, daß sich die Sendeleistung aufeinanderfolgender Aussendungen stark unterscheiden. Die Regelung der Sendeleistung erfolgt sehr stochastisch. Bei größeren Korrelationen unterscheiden sich aufeinanderfolgende Sendeleistungen nur gering. Das Gedächtnis für die vorangegangenen Sendeleistungen wird stärker berücksichtigt. Diese Ausprägung der Sendeleistungseinstellung hat dann ein teilweise deterministisches Verhalten.

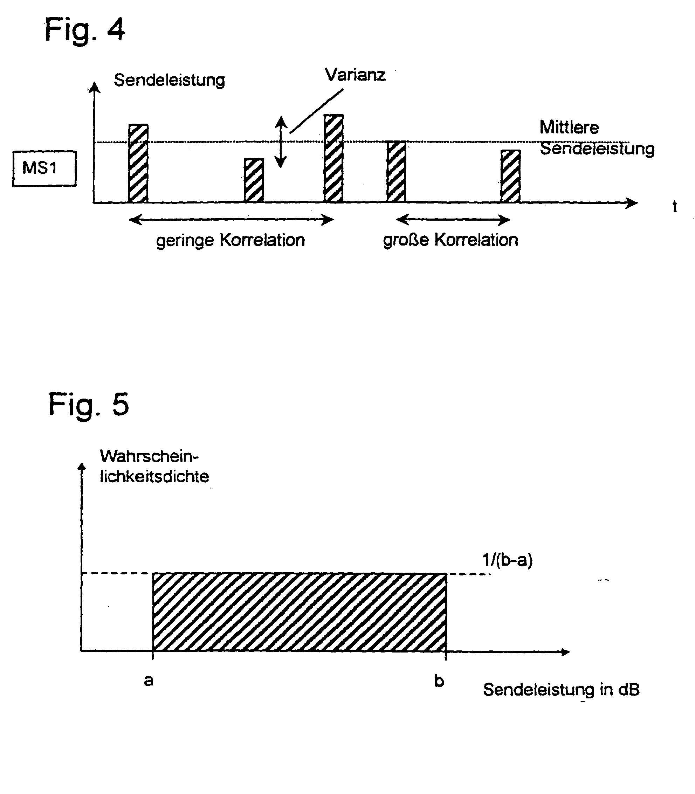

In Fig 5 ist eine mögliche Wahrscheinlichkeitsdichte der Sendeleistung dargestellt, wobei eine Gleichverteilung der logarithmischen Sendeleistung vorgeschlagen wird.

## Patentansprüche

1. Verfahren zur Signalübertragung in einem Kanal (RACH) zum willkürlichen Zugriff eines Funk-Kommunikationssystems, bei dem
mehrere Teilnehmerstationen (MS) den Kanal (RACH) zum willkürlichen Zugriff unkoordiniert benutzen,
die Teilnehmerstationen (MS) eine Signalübertragung in diesem Kanal (RACH) mit einer einstellbaren Sendeleistung vornehmen, und die Teilnehmerstationen (MS) die Sendeleistung nach einem Zufallsprinzip einstellen,
**dadurch gekennzeichnet,**
**dass** für einen die Sendeleistung einstellenden Zufallsgenerator die mittlere Sendeleistung vorgegeben ist.

2. Verfahren nach Anspruch 1, bei dem
das Zufallsprinzip nur für eine Teilmenge der ersten Aussendungen der Signalübertragung angewendet wird.

3. Verfahren nach einem der vorstehenden Ansprüche, bei dem sich die mittlere Sendeleistung an gemessenen Dämpfungswerten der Funkschnittstelle zwischen Basisstation (BS) und Teilnehmerstation (MS) orientiert.

4. Verfahren nach Anspruch 3, bei dem
die Dämpfungswerte durch Auswertung der Empfangsleistung eines Organisationskanals (BCCH) bestimmt werden.

5. Verfahren nach einem der vorherigen Ansprüche, bei dem für einen die Sendeleistung einstellenden Zufallsgenerator die Varianz der Sendeleistung mehrerer Aussendungen vorgegeben ist.

6. Verfahren nach einem der vorherigen Ansprüche, bei dem für einen die Sendeleistung einstellenden Zufallsgenerator der Korrelationskoeffizient für die Sendeleistungen mehrerer aufeinanderfolgender Aussendungen einer Teilnehmerstation (MS) vorgegeben ist.

7. Verfahren nach einem der vorherigen Ansprüche, bei dem die Aussendungen als Aufforderung zur Zuteilung funktechnischer Ressourcen, als Quittierung oder als Meldungen zur Aktualisierung des Aufenthaltsortes von Teilnehmerstationen (MS) gesendet werden.

8. Verfahren nach einem der vorherigen Ansprüche, bei dem der Kanal (RACH) breitbandig ist und nach einem TDD- oder FDD-Modus eines UMTS-Mobilfunksystems organisiert ist.

9. Teilnehmerstation (MS) für ein Funk-Kommunikationssystem, wobei das Funk-Kommunikationssystem einen Kanal (RACH) zum willkürlichen Zugriff aufweist, den mehrere Teilnehmerstationen (MS) unkoordiniert benutzen,
mit einer Sendeeinrichtung zur Signalübertragung im Kanal (RACH) zum willkürlichen Zugriff,
mit einer Steuereinrichtung, die die Sendeleistung der Signalübertragung entsprechend einem Zufallsprinzip einstellt, wobei für einen die Sendeleistung einstellenden Zufallsgenerator die mittlere Sendeleistung vorgegeben ist.

## Claims

1. Method for signal transmission in a random access channel (RACH) in a radio communications system,
in which
a number of subscriber stations (MS) use the random access channel (RACH) in an uncoordinated manner,
the subscriber stations (MS) transmit signals in this channel (RACH) with an adjustable transmission power level, and the subscriber stations (MS) set the transmission power level on the basis of a random principle,
**characterized**
**in that** the mean transmission power level is predetermined for a random number generator which sets the transmission power level

2. Method according to Claim 1, in which
the random principle is used only for a subset of the first transmissions in the signal transmission.

3. Method according to one of the preceding claims, in which
the mean transmission power level is based on measured attenuation values in the radio interface between the base station (BS) and the subscriber station (MS).
station (MS).

4. Method according to Claim 3, in which
the attenuation levels are determined by evaluating the received power level in an organization channel (BCCH) .

5. Method according to one of the preceding claims, in which
the variance of the transmission power level in a number of transmissions is predetermined for a random number generator which sets the transmission power level.

6. Method according to one of the preceding claims, in which
the correlation coefficient for the transmission power levels of a number of successive transmissions from a subscriber station (MS) is predetermined for a random number generator which sets the transmission power level.

7. Method according to one of the preceding claims, in which
the transmissions are sent as a request for allocation of radio resources, as an acknowledgement or as messages for updating the location of subscriber stations (MS).

8. Method according to one of the preceding claims, in which
the channel (RACH) is a broadband channel and is organized on the basis of a TDD or FDD mode in a UMTS mobile radio system.

9. Subscriber station (MS) for a radio communications system, with the radio communications system having a random access channel (RACH) which a number of subscriber stations (MS) use in an transmission in the random access channel (RACH), and having a control device which sets the transmission power level for the signal transmission on the basis of a random principle, with the mean transmission power level being predetermined for a random number generator which sets the transmission power level.

## Revendications

1. Procédé pour la transmission de signaux dans un canal (MACH) d'accès aléatoire d'un système de radiocommunication, dans lequel
- plusieurs stations d'abonnés (MS) utilisent de manière non coordonnée le canal (RACH) d'accès aléatoire,
- les stations d'abonnés (MS) opèrent une transmission de signaux dans ledit canal (RACH) avec une puissance d'émission réglable et
- les stations d'abonnés (MS) réglant la puissance d'émission selon un principe aléatoire,
**caractérisé en ce que**
la puissance moyenne d'émission est prédéterminée pour un générateur aléatoire réglant la puissance d'émission.

2. Procédé selon la revendication 1, dans lequel le principe aléatoire n'est appliqué que pour une quantité partielle des premières émissions de la transmission de signaux.

3. Procédé selon l'une des revendications précédentes, dans lequel la puissance moyenne d'émission s'oriente sur des valeurs d'affaiblissement mesurées de I'interface radio entre la station de base (BS) et la station d'abonné (MS).

4. Procédé selon la revendication 3, dans lequel les valeurs d'affaiblissement sont déterminées par analyse de la puissance de réception d'un canal d'organisation (BCCH).

5. Procédé selon l'une des revendications précédentes, dans lequel la variance de la puissance d'émission de plusieurs émissions est prédéterminée pour un générateur aléatoire réglant la puissance d'émission.

6. Procédé selon l'une des revendications précédentes, dans lequel le coefficient de corrélation pour les puissances d'émission de plusieurs émissions successives d'une station d'abonné (MS) est prédéterminé pour un générateur aléatoire réglant la puissance d'émission.

7. Procédé selon l'une des revendications précédentes, dans lequel les émissions sont émises en tant qu'invitation à l'affectation de ressources radio, en tant que confirmation ou en tant que messages pour l'actualisation de l'emplacement de stations d'abonnés (MS).

8. Procédé selon l'une des revendications précédentes, dans lequel le canal (RACH) est à large bande et est organisé selon un mode TDD ou FDD d'un système radio mobile UMTS.

9. Station d'abonné (MS) pour un système de radiocommunication, le système de radiocommunication présentant un canal (RACH) d'accès aléatoire utilisé de manière non coordonnée par plusieurs stations d'abonnés (MS), comprenant
- un dispositif d'émission pour la transmission de signaux dans le canal (RACH) d'accès aléatoire,
- un dispositif de réglage réglant la puissance d'émission de la transmission de signaux selon un principe aléatoire,
la puissance moyenne d'émission étant prédéterminée pour un générateur aléatoire réglant la puissance d'émission.
